# EUROPEAN PATENT SPECIFICATION

(11) **EP 2 947 315 B1**
(45) Date of publication and mention of the grant of the patent: **25.01.2017**
(21) Application number: 15159763.0
(22) Date of filing: 19.03.2015
(51) Int. Cl.: F03D 80/00, F03D 80/70, F03D 80/80

(54) **RENEWABLE ENERGY POWER GENERATING APPARATUS**
VORRICHTUNG ZUR ERZEUGUNG ERNEUERBARER ENERGIE
APPAREIL DE GÉNÉRATION D'ÉNERGIE RENOUVELABLE

(30) Priority: 23.05.2014 JP 2014107597
(43) Date of publication of application: 25.11.2015
(73) Proprietor: MITSUBISHI HEAVY INDUSTRIES, LTD., Tokyo 108-8215 (JP)
(72) Inventor: Kameda, Takuro, YOKOHAMA-SHI, KANAGAWA, 220-8401 (JP); Morii, Yoshiyuki, TOKYO, 108-8215 (JP)
(74) Representative: Intès, Didier Gérard André

(56) References cited:
- EP-A2- 2 182 208
- WO-A1-2013/087074
- CN-U- 202 484 301
- US-A1- 2013 341 021

## Description

### TECHNICAL FIELD

The present disclosure relates to a renewable energy power generating apparatus configured to generate electric power utilizing renewable energy.

### BACKGROUND

Renewable energy power generating apparatuses have become widely used in recent years in view of preservation of the global environment, including wind turbine power generating apparatuses utilizing wind power and power generating apparatuses utilizing tidal current, ocean current, or river current. A known renewable energy power generating apparatus includes blades for receiving renewable energy, a hub to which the blades are mounted, a main shaft coupled to the hub, and a generator for converting rotation energy of the main shaft into electric power.

A rotor including blades and a hub is normally mounted to a nacelle rotatably, and thus the nacelle is supported on a tower so as to be yaw rotatable in order to adjust orientation of the rotational plane of the rotor in accordance with the direction of the renewable energy. For instance, Patent Documents 1 and 2 disclose configurations where a wind turbine power generating apparatus, one of the renewable energy power generating apparatuses, includes a nacelle which yaw rotates via a yaw rotation bearing disposed on an upper end of a tower.

Inside a nacelle, arranged are a yaw motor which rotates the yaw rotation bearing, a drive train such as a gearbox and a hydraulic transmission, or various devices such as a main bearing for supporting the main shaft. Some of the above devices, such as bearings incorporated in the drive train and the main bearing, use lubricant agent or lubricant oil including grease. Further, when a hydraulic transmission is employed as the drive train, a large volume of working oil may be used, and cooling oil may be also used as a coolant for the devices. When oil leaks from such oil using units, the leaked oil may leak out to the outside of the renewable energy power generating apparatus.

In view of this, to prevent outward leakage of the leaked oil, Patent Document 3 discloses a configuration of a wind turbine power generating apparatus including a lubricant-oil collecting part which is connectable to a nacelle. The lubricant-oil collecting part includes a groove pressed against a tower via a flexible lateral portion.
Patent Document 4 discloses a wind turbine power generating apparatus according to the preamble of appended claim 1. Patent Document 5 discloses a wind turbine power generating apparatus comprising a tower, a nacelle mounted on the tower, and a flexible protection device fixed at a drip pan of the nacelle for directing contamination into the nacelle.

### Citation List

### Patent Literature

Patent Document 1: EP 2196668A
Patent Document 2: EP 2317137A
Patent Document 3: WO 2011/064002A
Patent Document 4: CN202484301U
Patent Document 5: EP2182208

### SUMMARY

As described above, the wind turbine power generating apparatus described in Patent Document 3 includes the lubricant-oil collecting part to prevent outward leakage of the leaked oil produced in the nacelle. However, since the nacelle yaw rotates with respect to the tower, the leaked oil may leak out from the wind turbine power generating apparatus through the vicinity of the yaw rotation bearing. In this regard, Patent Document 3 discloses preventing outward leakage of the leaked oil with the flexible lateral part disposed on the groove of the lubricant-oil collecting part upon yaw rotation. However, with the groove pressed against only from the lateral part, it may not be possible to prevent outward leakage of the leaked oil, because of a gap formed when foreign substances have entered into a sliding part.

Further, various types of oil are used in the nacelle, and the property and leaking path are different between the types of leaked oil. For instance, if the oil has a relatively high viscosity and is used in a small amount, such as lubricant oil and grease, the oil is likely to flow down structure components of the nacelle. On the other hand, if the oil has a relatively low viscosity and is used in a large amount, such as working oil and coolant oil, the oil may drop directly from the devices. Conventionally, there has been no countermeasure employed to effectively prevent outward leakage of such leaked oil with different properties.

An object of some embodiments of the present invention is to provide a renewable energy power generating apparatus capable of effectively preventing leakage to the outside of a renewable energy power generating apparatus of leaked oil with different properties.

A renewable energy power generating apparatus according to the present invention is defined in appended claim 1.

According to the above renewable energy power generating apparatus, the seal member and the seal cover are disposed at different positions in the height direction over a gap between the tower and the nacelle cover, which makes it possible to provide a double seal for the gap. Further, since the seal member and the seal cover have different structures from each other, it is possible to have two kinds of countermeasures against oil leakage according to the properties of the leaked oil, which makes it possible to prevent outward leakage of the leakage oil via the gap even more securely. For instance, it is possible to prevent outward leakage effectively with the seal member disposed so as to block the gap, when the leaked oil is provided in a small amount and the leaked oil flows down on the wall surface of a structural member, such as the nacelle and the tower. The leaked oil here is grease and lubricant oil which leaks out from the yaw rotation mechanism including the yaw rotation bearing, for instance. On the other hand, leaked oil from the oil using unit may be relatively large in volume. It is configured such that this type of leaked oil flows into the oil storing part, which makes it possible to collect the leaked oil having a relatively large volume in the oil storing part and to prevent outward leakage.

Furthermore, since the seal cover is mounted to a portion of a stationary section including the tower and the first bearing, it is possible to prevent the seal cover from being deformed by distortion. That is, a load may be applied to a rotational section including the nacelle, due to the rotor receiving wind, which may cause distortion in the rotational section and structural members attached to the rotational section. On the other hand, the stationary section receives a relatively small load from wind, and is fixed to the base via the tower, which makes it less likely for distortion to be caused in the stationary section. Thus, attaching the seal cover to the stationary section makes it possible to make the seal cover itself less likely to be distorted. As a result, it is possible to prevent the leaked oil from leaking outward through the gap caused by distortion of the seal cover.

Further, the oil storing part is disposed on the rotational section so as to rotate with the oil using units disposed in the interior space of the nacelle, which makes it possible to securely receive the leaked oil from the oil using unit. Still further, the oil storing part is disposed so as to receive the leaked oil flowing down the seal cover at a position lower than the seal cover. As described above, since it is configured such that the leaked oil from the oil using units flows into the oil storing part thanks to its own weight without using other devices, it is possible to simplify the apparatus.

In the present specification, a renewable energy power generating apparatus is a power generating apparatus utilizing renewably energy such as wind, tidal current, ocean current, and river current, which for instance includes a wind turbine power generating apparatus, a tidal current power generating apparatus, an ocean current power generating apparatus, and a river current power generating apparatus. Further, the leaked oil includes lubricant oil, working oil, coolant oil used as a coolant, or grease used as a lubricant agent.

In some embodiments, the oil storing part includes a nacelle oil pan formed by a part of the nacelle cover which is disposed at a lower part of the nacelle.

As described above, with the nacelle cover having a function of the oil storing part, it is possible to reduce the number of devices disposed in the nacelle, and to reduce the weight of the nacelle.

In some embodiments, the renewable energy power generating apparatus further includes a yaw drive for rotating the nacelle. The first rotation ring is disposed outside of the second rotation ring, and includes external teeth on an outer circumferential face of the first rotation ring. The yaw drive includes a pinion gear which engages with the external teeth. The seal member is disposed below the external teeth of the first rotation bearing.

Lubricant oil is generally supplied to an engaging portion between a pinion gear and external teeth, raising the risk of the lubricant oil dropping from the engaging portion. Since the external teeth of the first rotation ring (in this case, the outer race), which is disposed outside the second rotation ring, is positioned outside of the tower, raising the risk of the lubricant oil leaking out through the gap. Thus, in this configuration, employing the dual seal structure as described above makes it possible to prevent outward leakage of the lubricant oil having leaked from the yaw drive part or the yaw rotation bearing.

In some embodiments, the renewable energy power generating apparatus further includes: at least one blade; a hub to which the at least one blade is mounted; a nacelle base plate installed on the tower; a rotor coupled to the hub and rotatably supported on the nacelle base plate; a main oil pan disposed below the oil-using unit being disposed at a rear side of the interior space of the nacelle, where a side closer to the hub is a front side and a side farther from the hub is the rear side in a direction along a rotation shaft of the rotor, the main oil pan being supported on the nacelle base plate or a frame mounted to the nacelle base plate. The main oil pan is configured to receive the leaked oil from the oil-using unit.

As described above, since the main oil pan is supported on the nacelle base plate having a relatively high rigidity or on the frame mounted to the nacelle base plate, it is possible to increase the volume of leaked oil which can be received by the main oil pan. Further, since devices such as the main shaft and the main bearing are not disposed at the rear side of the interior space of the nacelle, it is possible to easily secure a room for installing the main oil pan.

In one embodiment, the renewable energy power generating apparatus further includes a leaked-oil guide disposed below the oil-using unit and above the seal cover, in the interior space of the nacelle. The leaked-oil guide is configured to guide the leaked oil from the oil-using unit to the main oil pan.

As a result, even when leaked oil having a relatively large volume has leaked from the oil using unit, it is possible to guide the leaked oil reliably to the main oil pan with the seal cover and the leaked-oil guide, as described above.

In some embodiments, the renewable energy power generating apparatus further includes: a second oil-using unit disposed lateral to the nacelle base plate in the interior space of the nacelle; a sub oil pan disposed below the second oil-using unit and configured to receive leaked oil from the second oil-using unit; and a drain part for guiding the leaked oil received at the sub oil pan to the main oil pan.

As described above, the sub oil pan receives the leaked oil from the second oil-using unit disposed at a different position from the oil-using unit, and then the leaked oil received by the sub oil pan is guided to the main oil pan via the drain part. In this way, it is possible to collect leaked oil from the oil using unit and the second oil-using unit, which are disposed at different positions, to the main oil pan. Further, since it is unnecessary to have the sub oil pan adapted to a large volume, it is possible to simplify the configuration of the sub oil pan.

In one embodiment, the renewable energy power generating apparatus further includes a protective wall disposed so as to cover at least a lateral side of the oil-using unit or the second oil-using unit.

In this way, even when the leaked oil has spouted from the oil using unit or the second-oil using unit, it is possible to prevent the leaked oil or a part that has been shattered by the leaked oil from hitting a side wall of the nacelle and damaging the nacelle, by providing the protective wall.

In one embodiment, the protective wall is supported on the nacelle base plate or the frame.

As described above, with the protective wall supported on the nacelle base plate having a relatively high rigidity or the frame mounted to the nacelle base plate, it is possible to install the protective wall rigidly so as to withstand the pressure from the leaked oil when the leaked oil has spouted from the oil-using unit or the second oil-using unit.

In some embodiments, the protective wall is disposed so that the leaked oil having hit the protective wall falls into the sub oil pan directly, or indirectly via a sub leaked-oil guide.

In this way, it is possible to guide the leaked oil having hit the protective wall to the sub oil pan securely.

In some embodiments, the protective wall has a liquid blocking property so that the leaked oil from the oil-using unit or the second oil-using unit does not leak out from the protective wall.

In this way, it is possible to securely prevent leakage of the leaked oil to the outside of the protective wall even when the leaked oil has spouted out from the oil-using unit or the second oil-using unit.

In some embodiments, the renewable energy power generating apparatus further includes: at least one blade; a hub to which the at least one blade is mounted; a nacelle base plate installed on the tower; a rotor coupled to the hub and rotatably supported on the nacelle base plate; a sub oil pan disposed below the oil-using unit disposed at a front side of the interior space of the nacelle, where a side closer to the hub is the front side and a side farther from the hub is a rear side in a direction along a rotation shaft of the rotor; a main oil pan disposed at the rear side of the interior space of the nacelle, the main oil pan being supported on the nacelle base plate or a frame mounted to the nacelle base plate; and a drain part for guiding the leaked oil received at the sub oil pan to the main oil pan. The main oil pan has a greater capacity than the sub oil pan.

The main shaft, the main bearing, and the like are disposed at the front side of the interior space of the nacelle, which therefore leads to a strict restriction on the space. In view of this, the sub oil pan is disposed below the oil-using unit, which is disposed at the front side of the interior space of the nacelle, and the main oil pan having a large capacity is disposed at the rear side of the nacelle, where it is easier to ensure a space. In this way, it is possible to securely receive the leaked oil from the oil using unit with the sub oil pan. Further, since the leaked oil in the sub oil pan is guided to the main oil pan having a large capacity, it is possible to reduce the size of the sub oil pan.

In some embodiments, the renewable energy power generating apparatus further includes an oil-spout prevention cover which covers at least a joint of a pipe connected to the oil-using unit.

The possibility of oil leakage is normally higher at the joint than at other parts of the pipe. Thus, with the oil-spout prevention cover being disposed at least on the joint, it is possible to prevent the leaked oil or a part that has been shattered by the leaked oil from hitting a side wall of the nacelle and damaging the nacelle, by providing the protective wall even when the leaked oil has spouted from the oil using unit or the second-oil using unit.

In one embodiment, the oil-spout prevention cover is attached to the joint of the pipe or to a structure which supports the joint, the oil-spout prevention cover having rigidity.

In this way, it is possible to install the protective wall rigidly so as to withstand the pressure from the leaked oil when the leaked oil has spouted from the oil-using unit or the second oil-using unit.

In one embodiment, the renewable energy power generating apparatus further includes: a leaked-oil guide disposed below the oil-using unit and above the seal cover, in the interior space of the nacelle; and an oil-spout prevention cover which covers at least a joint of a pipe connected to the oil-using unit. The leaked-oil guide is configured to guide the leaked oil from the oil-using unit to the main oil pan. At least one of the main oil pan, the leaked-oil guide, the sub oil pan or the sub leaked-oil guide is disposed below the oil-spout prevention cover.

In some embodiments, the renewable energy power generating apparatus is a wind turbine power generating apparatus which is configured to use wind energy received from wind serving as a renewable energy source to generate electric power.

According to the above renewable energy power generating apparatus, the seal member and the seal cover are disposed at different positions in the height direction over a gap between the tower and the nacelle cover, which makes it possible to provide a double seal for the gap. Further, since the seal member and the seal cover have different structures from each other, it is possible to have two kinds of countermeasures against oil leakage according to the properties of the leaked oil, which makes it possible to prevent outward leakage of the leakage oil via the gap even more securely.

Furthermore, since the seal cover is mounted to a portion of a stationary section including the tower and the first bearing, it is possible to prevent the seal cover from being deformed by distortion, and to prevent the leaked oil from leaking outward through the gap produced by distortion of the seal cover.

Further, the oil storing part is disposed on the rotational section so as to rotate with the oil using units disposed in the interior space of the nacelle, which makes it possible to securely receive the leaked oil from the oil using unit. Still further, the oil storing part is disposed so as to receive the leaked oil flowing down the seal cover at a position lower than the seal cover, and thus it is possible to simplify the apparatus.

### BRIEF DESCRIPTION OF DRAWINGS

FIG. 1 is a schematic diagram of an overall configuration of a wind turbine power generating apparatus according to some embodiments.
FIG. 2 is a schematic perspective view of an internal configuration of a nacelle according to some embodiments.
FIG. 3 is a cross-sectional view of a connection part between the nacelle and a tower according to one embodiment.
FIG. 4 is an enlarged cross-sectional view of a yaw rotation bearing of FIG. 3 and its surrounding structure.
FIG. 5 is a top planar view of a lower part of the nacelle of the wind turbine power generating apparatus according to another embodiment.
FIG. 6 is an enlarged cross-sectional view, taken along the line A-A of FIG. 5, of the yaw rotation bearing and its surrounding structure.
FIG. 7A is an enlarged cross-sectional view, taken along the line B-B of FIG. 5, of a seal member and a seal cover.
FIG. 7B is an enlarged cross-sectional view, taken along the line C-C of FIG. 5, of a seal member and a seal cover.
FIG. 8 is a cross-sectional view of the second-oil using unit and its surrounding structure according to one embodiment.
FIG. 9 is a perspective view of the pipe of the oil-using unit and its surrounding structure according to one embodiment.
FIG. 10 is a perspective view of an exemplary configuration of an oil-spout prevention cover.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

In the present embodiment, a wind turbine power generating apparatus 1 will be described as an example of renewable energy power generating apparatuses. However, the present embodiments can be applied to renewable energy power generating apparatuses in general. Herein, a renewable energy power generating apparatus refers to a power generating apparatus utilizing renewable energy such as wind, tidal current, ocean current, and river current. For instance, a tidal current power generating apparatus, an ocean current power generating apparatus, and a river current apparatuses can be mentioned, in addition to the wind turbine power generating apparatus described in the present embodiments.

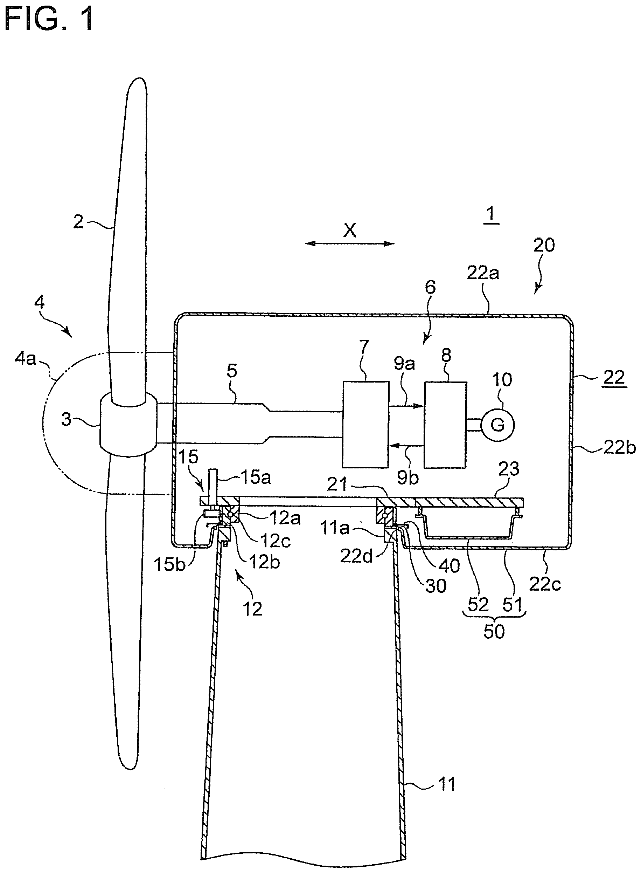

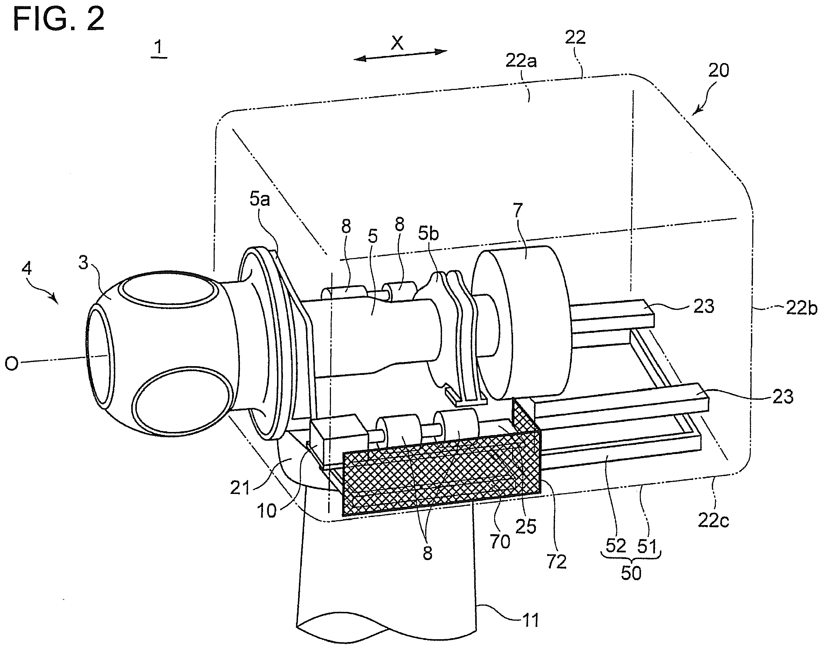

FIG. 1 is a schematic diagram of an overall configuration of a wind turbine power generating apparatus according to some embodiments. FIG. 2 is a schematic perspective view of an internal configuration of a nacelle according to some embodiments.

As illustrated in FIGs. 1 and 2, the wind turbine power generating apparatus 1 according to some embodiments includes a rotor 4 including at least one blade 2 and a hub 3, a main shaft 5 coupled to the hub 3, main bearings 5a, 5b which rotatably support the main shaft 5, a generator 10 which generates electric power, and a drive train 6 which transmits rotation energy of the main shaft 5 to the generator 10. The hub 3 may be covered by a hub cover 4a. Further, the wind turbine power generating apparatus 1 includes a tower 11 built on a base on water or on the ground, a nacelle 20 which supports the main shaft 5 rotatably, and a yaw rotation bearing 12 which supports the nacelle 20 rotatably on the tower 11. In one embodiment, the main shaft 5, the drive train 6 and the generator 10 are disposed in the interior space of the nacelle 20. In another embodiment, at least one device included in the drive train 6, or the generator 10, may be disposed outside the nacelle 20, such as in the interior space of the tower 11. Further, the wind turbine power generating apparatus 1 includes various devices or components for preventing outward leakage of leaked oil from an oil using unit (for instance, a hydraulic pump 7 described below) disposed in the interior space of the nacelle 20.

In one embodiment, as illustrated in FIGs. 1 and 2, the drive train 6 includes a hydraulic pump 7 mounted to the main shaft 5, and a hydraulic motor 8 connected to the hydraulic pump 7 via a high pressure oil line 9a and a low pressure oil line 9b. In FIG. 2, the high pressure oil line 9a and the low pressure oil line 9b are not illustrated. The hydraulic pump 7 is driven by the main shaft 5 to increase the pressure of working oil, thereby generating high pressure working oil (pressurized oil). The outlet of the hydraulic pump 7 is connected to the inlet of the hydraulic motor 8 via the high pressure oil line 9a. Thus, the pressurized oil generated in the hydraulic pump 7 is supplied to the hydraulic motor 8 via the high pressure oil line 9a, and drives the hydraulic motor 8. The low pressure working oil having performed work in the hydraulic motor 8 is returned again to the hydraulic pump 7 via the low pressure oil line 9b disposed between the outlet of the hydraulic motor 8 and the inlet of the hydraulic pump 7. Further, the output shaft of the hydraulic motor 8 is connected to the input shaft of the generator 10, so that rotation of the hydraulic motor 8 is inputted into the generator 10. In the drive train 6, it is sufficient if at least one hydraulic pump 7, at least one hydraulic motor 8, and at least one generator 10 are provided, so the number is not particularly limited for any of the above.

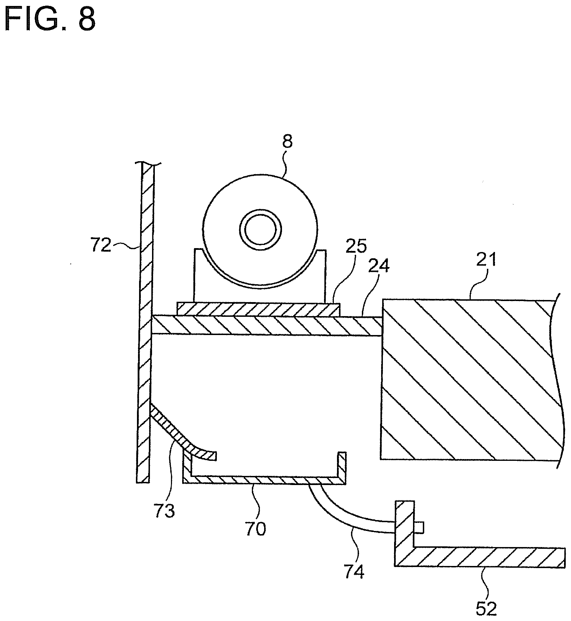

In one embodiment, the nacelle 20 includes a nacelle base plate 21 mounted to an upper end 11a of the tower 11 via a yaw rotation bearing 12, and a nacelle cover 22 supported on the nacelle base plate 21. The nacelle base plate 21 may include cast steel such as spherical graphite cast iron or high-duty cast iron, for instance. Further, a plurality of frames including a rear frame 23 may be attached and fixed to the nacelle base plate 21. For instance, the rear frame 23 is attached to the rear side of the nacelle base plate 21 so as to extend in the direction X of the rotation shaft of the rotor 4. In the present embodiment, in the direction along the direction X of the rotation shaft of the rotor 4, the rotor hub 3 side is defined as the front side, and the nacelle 20 side as the rear side. A lateral frame 24 is mounted to the nacelle base plate 21 directly, or indirectly via the rear frame 23 (see FIG. 8). The nacelle cover 22 may be supported by at least one of the frames including the rear frame 23 and the lateral frame 24. The nacelle cover 22 includes a top part 22a, a lateral part 22b and a bottom part 22c, which are arranged so as to surround the main shaft 5 and the oil-using units. The bottom part 22c includes an edge portion 22d of a circular shape along the outer circumferential surface of the upper end 11a of the tower 11. This edge portion 22d forms a circular opening along the outer circumferential surface of the upper end 11a of the tower 11. A gap is disposed between the edge portion 22d and the upper end 11a of the tower 11, so that the nacelle 20 is rotatable with respect to the tower 11.

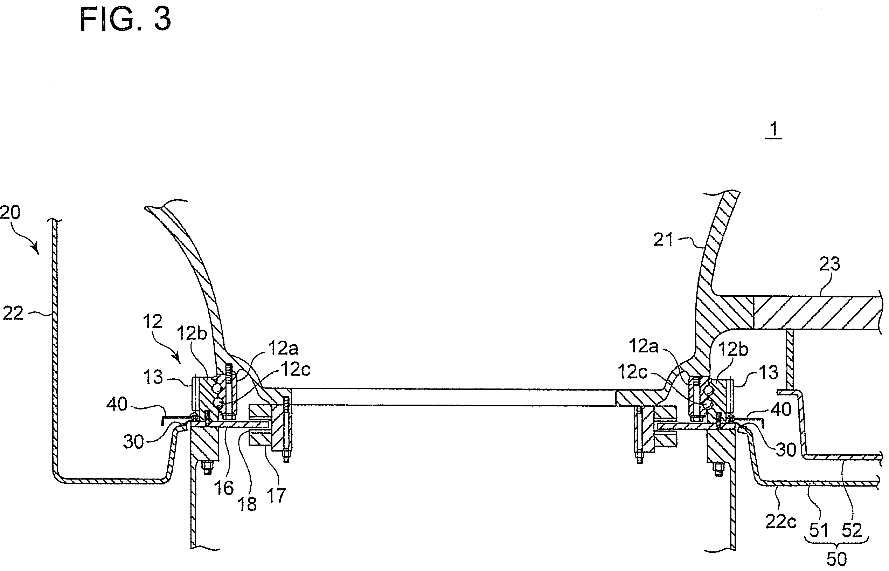

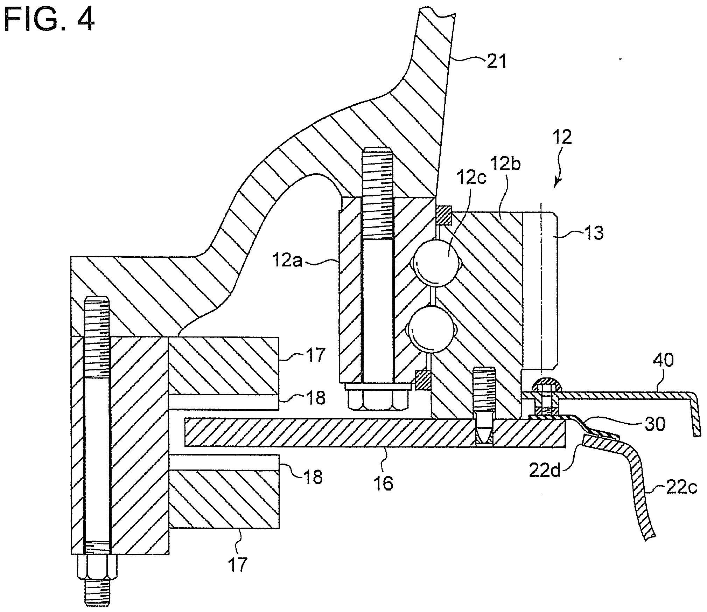

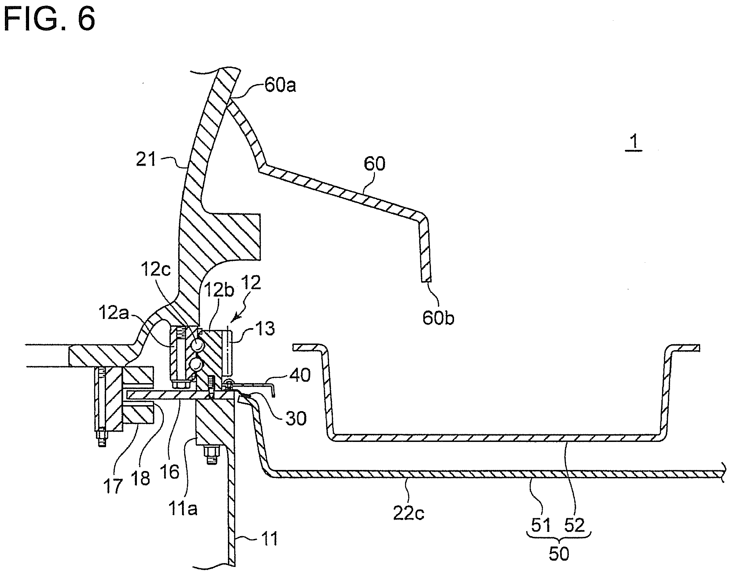

Next, in reference to FIGs. 1, 3, 4 and 6, the yaw rotation mechanism will be described. FIG. 3 is a cross-sectional view of a connection part between the nacelle and a tower according to one embodiment. FIG. 4 is an enlarged cross-sectional view of a yaw rotation bearing of FIG. 3 and its surrounding structure. FIG. 6 is an enlarged cross-sectional view of the yaw rotation bearing and its surrounding structure of the wind turbine power generating apparatus according to another embodiment.

In one embodiment, the yaw rotation bearing 12 includes an inner race 12a fixed to the nacelle base plate 21, an outer race 12b fixed to the upper end 11a of the tower 11, and a ball bearing 12c interposed between the inner race 12a and the outer race 12b. External teeth 13 are formed on the outer circumferential surface of the outer race 12b. Further, the wind turbine power generating apparatus 1 includes a yaw drive part 15 as a mechanism for relatively rotating the inner race 12a and the outer race 12b of the yaw rotation bearing 12 with respect to each other. The yaw drive part 15 includes a pinion gear 15b engaging with the external teeth 13, and a yaw motor 15a for driving the pinion gear 15b. For instance, the inner race 12a and the nacelle base plate 21, or, the outer race 12b and the upper end 11a of the tower 11, are fastened to each other by bolts. In the present embodiment, the first rotation ring fixed to the tower 11 side is the outer race 12b, and the second rotation ring fixed to the nacelle base plate 21 side is the inner race 12a.

In the yaw rotation mechanism including the above yaw rotation bearing 12 and yaw drive part 15, the pinion gear 15b supported on the nacelle 20 side is arranged so as to engage with the external teeth 13 supported on the tower 11 side. Thus, when the pinion gear 15b is rotated by the yaw motor 15a, the pinion gear 15b rotates about the center axis of the tower 11 with the nacelle 20 and the inner race 12a supported on the nacelle 20. At this time, the outer race 12b supported on the tower 11 side and the inner race 12a supported on the nacelle 20 side rotate relatively via the ball bearing 12c. In this way, it is possible to rotate the nacelle 20 relatively to the tower 11 about the center axis of the tower 11 by driving the yaw drive part 15.

Further, the wind turbine power generating apparatus 1 includes a brake mechanism for applying braking force to the nacelle 20 which is yaw rotated by the yaw rotation mechanism.

In one embodiment, the brake mechanism includes a brake disc 16 fixed to the upper end 11a of the tower 11, and a brake caliper 17 and a brake pad 18 fixed to the nacelle base plate 21. The brake disc 16 is disposed between the lower end surface of the yaw rotation bearing 12 and the upper end surface of the tower 11. Further, the brake disc 16 may be formed in an annular shape which extends toward the inner circumferential side from the upper end 11a of the tower 11. The brake caliper 17 stops the relative rotation between the brake disc 16 and the brake caliper 17 by pressing the brake pad 18 against both sides of the brake disc 16 and generating frictional force. As a result, braking force is applied to the nacelle 20 to which the brake caliper 17 is mounted by the brake disc 16 mounted to the tower 11. Here, a plurality of brake calipers 17 and brake pads 18 may be disposed at a predetermined interval in the circumferential direction of the brake disc 16.

The wind turbine power generating apparatus 1 with the above configuration further includes the following configuration in order to prevent leakage of leaked oil to the outside of the wind turbine power generating apparatus 1. In the present embodiment, the leaked oil includes lubricant oil, working oil, coolant oil, or grease used as a lubricant agent. In a case where a hydraulic transmission is used as the drive train 6, a specific example of the leaked oil is the working oil of the hydraulic pump 7, or the lubricant oil or coolant oil of the hydraulic pump 7, the hydraulic motor 8, or the generator 10. In a case where a gearbox is used as the drive train 6, a specific example of the leaked oil is the lubricant oil of the gears, or lubricant oil or grease used in the yaw rotation mechanism, such as grease of the yaw rotation bearing 12, or the lubricant oil of the yaw drive part 15.

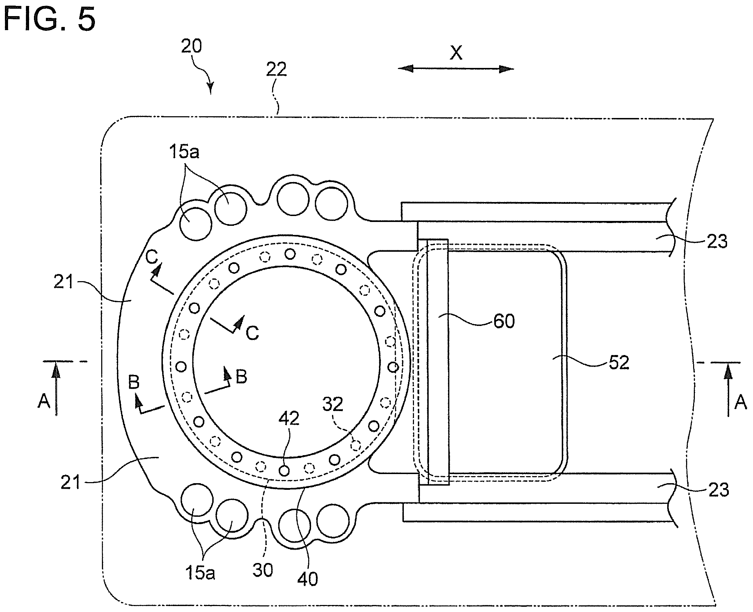

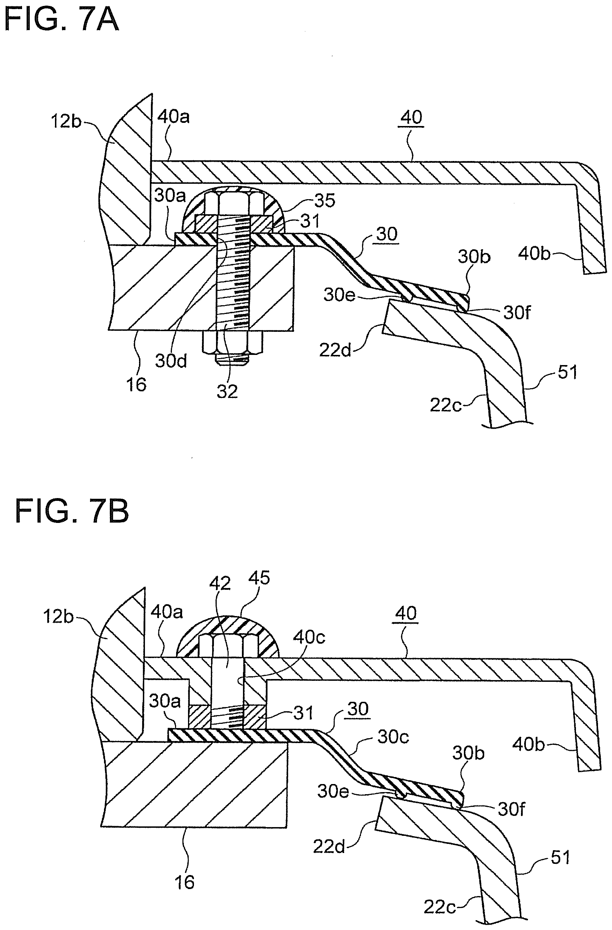

As illustrated in FIGs. 1 to 6, 7A, and 7B, the wind turbine power generating apparatus 1 according to one embodiment includes a seal member 30 and a seal cover 40 for preventing leaked oil from leaking out to the outside of the wind turbine power generating apparatus 1 through a gap between the tower 11 and the nacelle 20, and an oil storing part 50 for storing the leaked oil. FIG. 5 is a top planar view of a lower part of the nacelle of the wind turbine power generating apparatus according to another embodiment. FIG. 7A is an enlarged cross-sectional view, taken along the line B-B of FIG. 5, of a seal member and a seal cover. FIG. 7B is an enlarged cross-sectional view, taken along the line C-C of FIG. 5, of a seal member and a seal cover. FIG. 6 is a cross-sectional view taken along the line A-A of FIG. 5.

The specific exemplary configuration of each part will be described below in detail. In the following description, a section including the tower 11 and the outer race 12b is collectively referred to as the stationary section, and a section including the nacelle 20 and the inner race 12a is collectively referred to as the rotational section. That is, the rotational section is configured to be rotatable with respect to the stationary section.

The seal member 30 is disposed so as to fill a gap between the tower 11 and the nacelle cover 22. In one embodiment, the seal member 30 is disposed so as to fill a gap between the upper end 11a of the tower 11 and the edge portion 22d of the bottom part 22c of the nacelle cover 22. The seal member 30 is disposed in an annular shape (see FIG. 5) along the outer circumferential surface of the upper end 11a of the tower 11, so that the inner circumferential side 30a of the seal member 30 is attached and fixed to the stationary section, and the outer circumferential side contacts the rotational section. In the exemplary configuration illustrated in the drawing, the seal member 30 is formed in an integrated annular shape. The inner circumferential side 30a of the seal member 30 is mounted and fixed to the brake disc 16, and the outer circumferential side 30b slidably contacts the upper surface of the edge portion 22d of the bottom part 22c of the nacelle cover 22. As in the drawing, in a configuration where the outer race 12b is mounted to the upper end 11a of the tower 11 and the inner race 12a is mounted to the nacelle 20, the seal member 30 may be disposed below the external teeth 13 of the outer race 12b. Lubricant oil is generally supplied to an engaging portion between the pinion gear 15b and the external teeth 13, raising the risk of the lubricant oil dropping from the engaging portion. The external teeth 13 of the outer race 12b are disposed outside the tower 11, raising the risk of the lubricant oil leaking out through the gap. In view of this, the seal member 30 is disposed below the external teeth 13, which makes it possible to prevent outward leakage of the lubricant oil having leaked out from the yaw rotation bearing 12 or the yaw drive part 15. In another exemplary configuration which is not illustrated, the inner circumferential side 30a of the seal member 30 may be attached and fixed to the upper end 11a of the tower 11, or to the outer race 12b.

Further, in another example, the seal member 30 may include a plurality of arc sections that are parts of a ring divided into two or more sections, each section being attached to the stationary section so as to form a ring. In yet another example, the seal member 30 may include at least one arc section to cover a part, in the circumferential direction, of the gap between the upper end 11a of the tower 11 and the edge portion 22d of the bottom part 22c of the nacelle cover 22.

The seal member 30 may include a flexible or elastic material such as elastomer and low-rigidity metal. In this way, if the outer circumferential side 30b of the seal member 30 is maintained to be in contact with the rotational section be being forced against the rotational member, the contact between the seal member 30 and the rotational section is securely maintained even when the rotational section rotates. Further, at least a part of the seal member 30 may include a region 30c inclined in the radial direction, so that the outer circumferential side 30b is positioned below the inner circumferential side 30a of the seal member 30. In this way, it is possible to guide leaked oil having flowed down onto the upper surface of the seal member 30 to the oil storing part 50 by gravity force.

The seal cover 40 is attached to a portion of the stationary section, and arranged so as to cover a gap between the upper end 11a of the tower 11 and the edge portion 22d of the nacelle cover 22, above the seal member 30. In the example illustrated in the drawing, the seal cover 40 is formed in an integrated annular shape (see FIG. 5), with the inner circumferential side 40a attached and fixed to the brake disc 16 and the outer circumferential side 40b protruding to above the oil storing part 50. The seal member 30 is, for instance, formed from resin or metal, and has a certain level of rigidity that allows the seal member 30 to maintain the overall shape even when the outer circumferential side 40b is a free end not supported on any part (i.e., in a cantilever fashion). Further, to position the outer circumferential side 40b lower than the inner circumferential side 40a of the seal cover 40, at least a part of the seal cover 40 may include a region (in the drawing, the outer circumferential side 40b) inclined in the radial direction. In this way, it is possible to guide the leaked oil having flowed down onto the upper surface of the seal cover 40 to the oil storing part 50 by gravity force. In another example not illustrated, the inner circumferential side 40a of the seal cover 40 may be attached and fixed to the upper end 11a of the tower 11, or to the outer race 12b. In another example, the seal cover 40 may include a plurality of arc sections that are parts of a ring divided into two or more sections, each section being attached to the stationary section so as to form a ring. In yet another example, the seal cover 40 may include at least one arc section to cover a part, in the circumferential direction, of the gap between the upper end 11a of the tower 11 and the edge portion 22d of the bottom part 22c of the nacelle cover 22.

As described above, since the seal cover 40 is mounted to a portion of the stationary section including the tower 11 and the outer race 12b, it is possible to prevent the seal cover 40 from being deformed by distortion. That is, a load may be applied to the rotational section including the nacelle 20, due to the rotor 4 receiving wind, which may cause distortion in the rotational section and structure members attached to the rotational section. On the other hand, the stationary section receives a relatively small load from wind, and is fixed to a base via the tower 11, which makes distortion less likely to be caused in the stationary section. Thus, attaching the seal cover 40 to the stationary section makes it possible to make the seal cover 40 itself less likely to be distorted. As a result, it is possible to prevent the leaked oil from leaking outward through a gap produced by distortion of the seal cover 40.

The examples illustrated in FIGs. 7A and 7B use different bolts to fasten each of the seal member 30 and the seal cover 40 to the stationary section. Further, FIGs. 7A and 7B are cross sections taken from different lines in the circumferential direction on the upper end 11a of the tower 11.

As illustrated in FIG. 7A, the seal member 30 includes a plurality of bolt holes 30d, and the seal member 30 is fastened to the brake disc 16 by respective bolts 32 inserted into the plurality of bolt holes 30d. The plurality of bolt holes 30d and the plurality of bolts 32 are disposed away from one another so as to be arranged in an annular shape along the outer circumferential surface of the upper end 11a of the tower 11 (see FIG. 5). Further, an annular member 31 is fastened by the bolts 32 along with the seal member 30. In this way, the seal member 30 and the annular member 31 are mounted and fixed to the brake disc 16. Further, to prevent leakage of the leaked oil through the bolt holes 30d of the seal member 30, the heads of the bolts 32 may be covered by the second seal members 35.

As illustrated in FIG. 7B, the seal cover 40 includes a plurality of bolt holes 40c, and the inner circumferential side 40a of the seal cover 40 is fastened to the brake disc 16 by respective bolts 42 inserted into the plurality of bolt holes 40c, above the inner circumferential side 30a of the seal member 30. The plurality of bolt holes 40d and the plurality of bolts 42 are disposed away from one another so as to be arranged in an annular shape along the outer circumferential surface of the upper end 11a of the tower 11 (see FIG. 5). Specifically, the annular member 31 is mounted to the brake disc 16 by the bolts 32 as described above, and the bolts 42 are screwed to the annular member 31, so that in consequence the seal cover 40 is indirectly fixed to the brake disc 16. Further, to prevent leakage of the leaked oil through the bolt holes 40d of the seal cover 40, the heads of the bolts 42 may be covered by the third seal members 45.

Furthermore, in another embodiment, the seal member 30 and the seal cover 40 may be fastened to the brake disc 16 by the same bolts. Specifically, each of the plurality of bolts arranged in the circumferential direction on the brake disc 16 is fastened to the brake disc 16 through both of the seal cover 40 and the seal member 30. In this case, the annular member 31 is no longer necessary. Further, to prevent leakage of the leaked oil through the penetrating parts of the bolts on the seal cover 40 and the seal member 30, a seal is applied to each penetrating part of the seal cover 40 and the seal member 30. At this time, however, it is difficult to apply a seal to the penetrating parts of the bolts of the seal member 30 in a narrow space between the seal cover 40 and the brake disc 16 in the presence of the seal cover 40. Here, as in the embodiment illustrated in FIGs. 7A and 7B, providing the annular member 31 can improve workability. That is, in the embodiment illustrated in the drawings, the seal member 30 and the annular member 31 are mounted to the brake disc 16 before mounting the seal cover 40. Then, in a large space where the seal cover 40 is not present, the second seal member 35 is applied so as to cover the heads of the bolts 32. Next, the seal cover 40 is mounted to the annular member 31 by the bolts 42, and the third seal member 45 is applied so as to cover the heads of the bolts 42. At this time, the bolts 42 do not penetrate the seal member 30, which makes it unnecessary to seal the seal member 30 at this stage. As described above, using the annular member 31 makes it no longer necessary to carry out the seal-applying work (work for applying a seal that covers the bolt-through holes), in a narrow space between the seal cover 40 and the brake disc 16. As a result, it is possible to improve the workability in attaching the seal member 30 and the seal cover 40.

Further, as illustrated in FIGs. 7A and 7B, the seal member 30 may include at least one protrusion 30e, 30f on the contact surface of the seal member 30 contacting the edge portion 22d of the bottom part 22c of the nacelle cover 22. The protrusions 30e, 30f are formed in an annular shape along the outer circumferential surface of the upper end 11a of the tower 11. In the drawing, two protrusions 30e, 30f are disposed in the radial direction of the seal member 30. The protrusions 30e, 30f may be covered by friction-resistant coating. The seal member 30 slides on the upper surface of the edge portion 22d of the bottom part 22c of the nacelle cover 22 when the nacelle 20 yaw rotates. Thus, with the protrusions 30e, 30f disposed on the seal member 30, the seal member 30 contacts the edge portion 22d on a point or a line rather than a plane, which makes it possible to securely prevent outward leakage of leaked oil.

As described above, with the seal member 30 and the seal cover 40 disposed at different positions, in the height direction, over a gap between the upper end 11a of the tower 11 and the edge portion 22d of the opening of the nacelle cover 22, it is possible to provide a double seal over the gap. Further, with the seal member 30 and the seal cover 40 having different structures, it is possible to provide two kinds of oil-leakage countermeasures according to the properties of the leaked oil, which makes it possible to prevent outward leakage of the leaked oil via the gap even more securely. For instance, it is possible to prevent outward leakage effectively with the seal member 30 disposed so as to block the gap, when the leaked oil is small in volume and flows down on the wall surface of a structure member such as the nacelle 20 and the tower 11. For instance, the leaked oil here is grease or lubricant oil having leaked out from the yaw rotation mechanism including the yaw rotation bearing 12 and the yaw drive part 15 or the brake mechanism. On the other hand, leaked oil from the oil using unit such as the hydraulic pump 7 may be relatively large in volume. It is configured such that this type of leaked oil flows into the oil storing part 50 (e.g. the nacelle oil pan 51) via the seal cover 40 disposed so as to cover the gap above the seal member 30, which makes it possible to collect the relatively large amount of leaked oil into the oil storing part 50 to prevent outward leakage.

As illustrated in FIGs. 1 to 6, 7A, and 7B, in one embodiment, the oil storing part 50 is disposed on the rotational section including the nacelle 20, below the seal cover 40.

As described above, with the oil storing part 50 disposed on the rotational section, the oil storing part rotates with the oil using unit (e.g. the hydraulic pump 7) disposed in the interior space of the nacelle 20, which makes it possible to securely receive the leaked oil from the oil using unit. Further, the oil storing part 50 (e.g. the nacelle oil pan 51) is disposed so as to receive the leaked oil flowing down the seal cover 40, at a position lower than the seal cover 40. As described above, it is configured such that the leaked oil from the oil using units flows into the oil storing part 50 thanks to its own weight without using other devices, which makes it possible to simplify the apparatus.

The oil storing part may include at least one of the nacelle oil pan 51 or the main oil pan 52.

The nacelle oil pan 51 is formed by a part of the nacelle cover 22 that is positioned below the nacelle 20. Specifically, the nacelle oil pan 51 may be formed by at least a part of the bottom part 22c of the nacelle cover 22, or by at least a part of the bottom part 22c and a lower portion of the lateral part 22b. For instance, leaked oil from the hydraulic pump 7 flows down the seal cover 40 to be received by the nacelle oil pan 51. As described above, with the nacelle cover 22 having the function of the oil storing part 50, it is possible to reduce the number of devices disposed in the nacelle 20, and to reduce the weight of the nacelle 20. Here, it may be configured such that the leaked oil flowing down the seal cover 40 flows into the following main oil pan 52.

The main oil pan 52 is disposed in the interior space of the nacelle 20. As a specific configuration, the main oil pan 52 is disposed below the oil using unit (in the example illustrated in the drawing, the hydraulic pump 7) disposed at the rear side of the interior space of the nacelle 20, and supported on the nacelle base plate 21 or the frame mounted to the nacelle base plate 21. For instance, the main oil pan 52 is supported on two rear frames 23 coupled to the rear side of the nacelle base plate 21. As illustrated in FIG. 5, in a case where the two rear frames 23 extending in the direction X of the rotation shaft of the rotor 4 are disposed away from and parallel to each other, the main oil pan 52 may be disposed between the two rear frames 23. In the present embodiment, a side closer to the hub 3 is referred to as the front side, and a side further from the hub 3 is referred to as the rear side, with respect to the direction X of the rotation shaft of the rotor 4. As described above, with the main oil pan 52 supported on the nacelle base plate 21 having a relatively high rigidity or the rear frame 23 mounted to the nacelle base plate 21, it is possible to increase a volume of leaked oil that can be received by the main oil pan 52. Further, since devices such as the main shaft 5 and the main bearings 5a, 5b are not disposed at the rear side of the internal space of the nacelle 20, it is possible to easily ensure a space for placing the main oil pan 52.

As illustrated in FIGs. 5 and 6, the wind turbine power generating apparatus 1 according to another embodiment includes a leaked-oil guide 60 disposed below the oil using unit (in the illustrated example, the hydraulic pump 7) and above the seal cover 40, in the interior space of the nacelle 20. The leaked-oil guide 60 is configured to guide the leaked oil from the oil using unit to the main oil pan 52. Further, the leaked-oil guide 60 may include a stepped portion such that the rear end 60b is positioned below the front end 60a, in the direction X of the rotation shaft of the rotor 4. In this way, the leaked oil flows down to the main oil pan 52 due to the gravity force. Further, the leaked-oil guide 60 may include an inclined portion such that the rear end 60b is positioned below the front end 60a, in at least a part in the direction X of the rotation shaft of the rotor 4. Here, the leakage-oil guide 60 is disposed mainly between a part below the oil-using unit and the main oil pan 52, and it is unnecessary to dispose the leakage-oil guide 60 along the entire outer periphery of the upper end 11a of the tower 11. For instance, the leaked-oil guide 60 is disposed only at the rear side of the outer periphery of the upper end 11a of the tower 11, which is positioned below the oil-using unit. However, it will be understood that the leaked-oil guide 60 may be disposed along the entire outer periphery of the upper end 11a of the tower 11. As described above, with the leaked-oil guide 60 provided, it is possible to guide the leaked oil securely to the main oil pan 52 with the seal cover 40 and the leaked-oil guide 60, even when a relatively large amount of leaked oil has leaked out from the oil using unit.

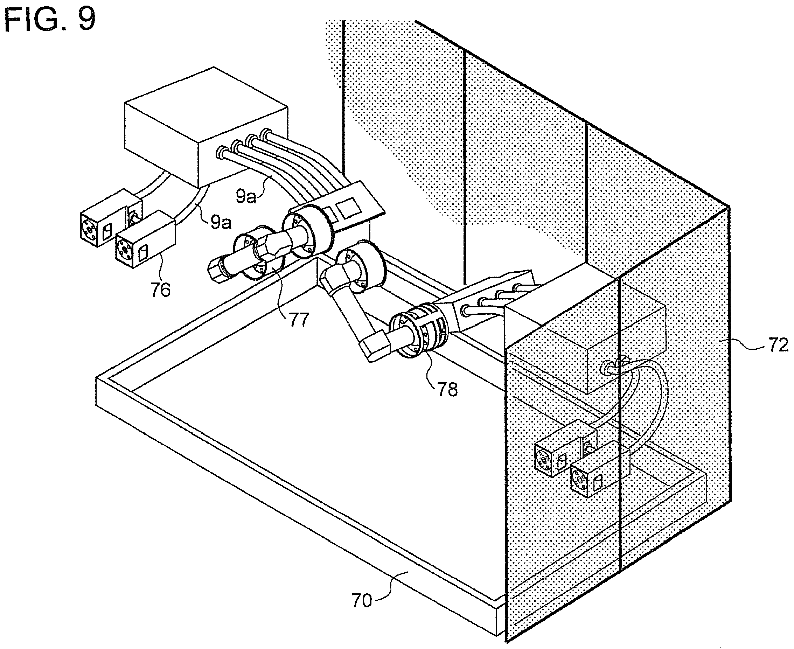

As illustrated in FIGs. 2 and 8, the wind turbine power generating apparatus 1 according to some embodiments includes the second oil-using unit disposed lateral to the nacelle base plate 21 in the internal space of the nacelle 20, and a sub oil pan 70 disposed below the second oil-using unit and configured to receive the leaked oil from the second-oil using unit. FIG. 8 is a cross-sectional view of the second-oil using unit and its surrounding structure according to one embodiment. In the illustrated example, the hydraulic motor 8 is provided as the second oil-using unit. The hydraulic motor 8 is placed on a motor placement base 25 mounted to the lateral frame 24. The lateral frame 24 is mounted to the nacelle base plate 21 so as to extend laterally from the nacelle base plate 21. Further, below the hydraulic motor 8, a group of pipes (see FIG. 9) or an accumulator (not illustrated) may be disposed.

The sub oil pan 70 is supported on the nacelle base plate 21 or the lateral frame 24 so as to be disposed below the hydraulic motor 8. Further, the sub oil pan 70 is disposed above the oil pan 52, and the sub oil pan 70 and the man oil pan 52 are connected to each other via the drain part 74, so that leaked oil stored in the sub oil pan 70 is guided to the main oil pan 52 via the drain part 74. As described above, the leaked oil from the second oil-using unit disposed at a different position from the above oil-using unit is received by the sub oil pan 70, and the leaked oil received by the sub oil pan 70 is guided to the main oil pan 52 via the drain part 74. In this way, it is possible to collect the leaked oil from the oil-using unit and the second oil-using unit disposed at different position, to the main oil pan 52. Also, it is unnecessary for the sub oil pan 70 to have a large capacity, which makes it possible to simplify the configuration of the sub oil pan 70.

As illustrated in FIGs. 2 and 8, in one embodiment, the wind turbine power generating apparatus 1 further includes a protective wall 72 arranged so as to cover at least a lateral side of the oil-using unit or the second oil-using unit. In the illustrated example, the protective wall 72 is disposed so as to cover the lateral side of the hydraulic motor 8. Further, in a case where a group of pipes (see FIG. 9) or an accumulator (not illustrated) is disposed in the lower space of the hydraulic motor 8, the protective wall 72 may be disposed so as to cover the lateral side of the above. In this way, even when leaked oil has spouted from the oil-using unit or the second oil-using unit, it is possible to prevent the leaked oil or a part blown off by the spouted leaked oil from hitting the lateral part 22b of the nacelle cover 22 and damaging the nacelle cover 22 with the protective wall 72. Here, the protective wall 72 may be configured so as to cover at least one of the upper part or the lower part of the oil-using unit or the second oil-using unit.

Further, the protective wall 72 may be supported on the nacelle base plate 21, the rear frame 23, or the lateral frame 24. In this way, with the protective wall 72 supported on the nacelle base plate 21 having a relatively high rigidity, or the rear frame 23 or lateral frame 24 mounted to the nacelle base plate 21, it is possible to install the protective wall 72 rigidly so as to withstand the pressure of the leaked oil when the leaked oil has spouted from the oil-using unit or the second oil-using unit.

The protective wall 72 is disposed so that the leaked oil having hit the protective wall 72 falls into the sub oil pan 70 directly, or indirectly via a sub leaked-oil guide 73. In this way, it is possible to guide the leaked oil having hit the protective wall 72 to the sub oil pan 70 securely. For instance, the sub leaked-oil guide 73 is mounted to the protective wall 72 at the first end, and the second end of the sub leaked-oil guide 73 extends into the sub oil pan 70. In this case, the leaked oil having hit the protective wall 72 flows down the inner wall surface of the protective wall 72, and then flows into the sub oil pan 70 via the sub leaked-oil guide 73. Then, the leaked-oil stored in the sub oil pan 70 is collected into the main oil pan 52 via the drain part 74.

Further, the protective wall 72 may have a liquid blocking property so that the leaked oil from the oil-using unit or the second oil-using unit does not leak out from the protective wall 72. In this way, it is possible to securely prevent leakage of the leaked oil to the outside of the protective wall 72 even when the leaked oil has spouted out from the oil-using unit or the second oil-using unit.

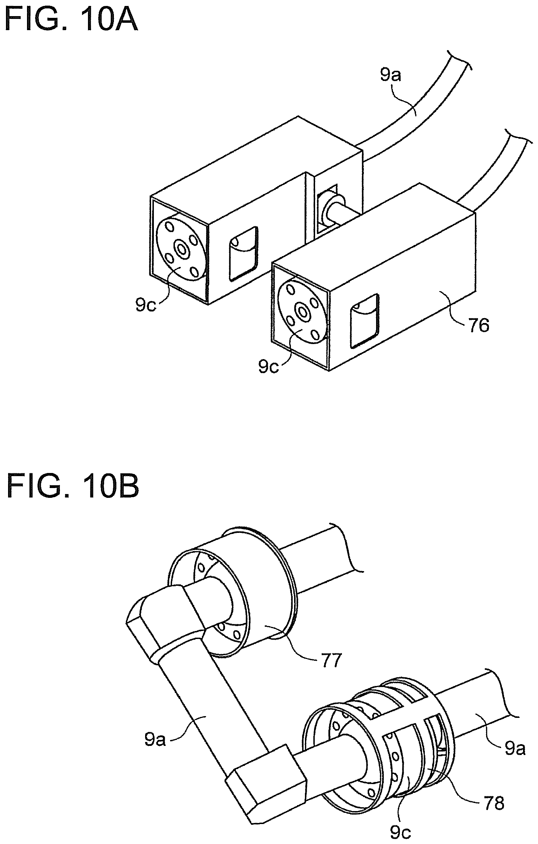

As illustrated in FIGs. 9 and 10, the wind turbine power generating apparatus 1 according to some embodiments includes an oil-spout prevention cover 76, 77, 78 which covers at least a joint 9c of pipes 9a (or pipes 9b or the like) connected to the oil-using unit. FIG. 9 is a perspective view of the pipes of the oil-using unit and its surrounding structure according to one embodiment. FIGs. 10A and 10B are each a perspective view of an exemplary configuration of an oil-spout prevention cover. While the high pressure oil line 9a from FIG. 1 is illustrated in FIGs. 9 to 10B as the pipes 9a, the configuration in the drawings may be applied to the low pressure oil line 9 (the pipes 9b). The joint 9c may include flanges of the ends of the pipes 9a fastened to each other by bolts. Generally, the joint 9c of the pipes 9a especially has a high risk of oil leakage. Thus, providing the oil-spout prevention cover 76, 77, 78 at least for the joint 9c makes it possible to prevent the leaked oil or a part shattered by the leaked oil from hitting the nacelle cover 22 and damaging the nacelle 20, even when the leaked oil has spouted from the joint 9c. The oil-spout prevention cover 76, 77, 78 may be configured so as to cover at least a part of the joint 9c. That is, as in the illustrated example, the oil-spout prevention cover 76, 77, 78 includes at least one opening and may be configured such that it is possible to perform maintenance on the joint 9c through this opening. It should be noted that, the oil-spout prevention cover 76, 77, 78 has a shape such that the oil-spout prevention cover 76, 77, 78 covers a part of the joint 9c where there is the risk of oil spout or shattering. Further, the oil-spout prevention cover 76, 77, 78 may extend to a part of the pipes 9a other than the joint 9c.

Further, the oil-spout prevention cover 76, 77, 78 is mounted to the joint 9c of the pipes 9a or to a structure supporting the joint 9c so as to have rigidity. For instance, the oil-spout prevention cover 76, 77, 78 may be mounted to the nacelle base plate 21, the rear frame 23 or the lateral frame 24, or to a torque arm (not illustrated) supporting the hydraulic pump 7, or the main bearings 5a, 5b (see FIG. 2), for instance. In this way, it is possible to install the oil-spout prevention cover 76, 77, 78 rigidly so as to withstand the pressure of the leaked oil when the leaked oil has spouted out from the joint 9c of the pipes 9a.

Further, at least one of the main oil pan 52, the leaked-oil guide 60, the sub oil pan 70 or the sub leaked-oil guide 73 may be disposed below the oil-spout prevention cover 76, 77, 78. In the illustrated example, the sub oil pan 70 is disposed below the oil-spout prevention cover 76, 77, 78. In this way, it is possible to prevent outward leakage of the leaked oil having spouted from at least the joint 9c of the pipes 9a with the oil-spout prevention cover 76, 77, 78. Also, it is possible to securely guide the leaked oil to the oil storing part 50 even when the leaked oil spouts from the joint 9c of the pipes 9a, because the leaked oil having hit the oil-spout prevention cover 76, 77, 78 flows down into at least one of the main oil pan 52, the leaked-oil guide 60, the sub oil pan 70 or the sub leaked-oil guide 73 disposed below the oil-spout prevention cover 76, 77, 78.

In another embodiment, when the oil using unit (e.g. the hydraulic pump 7) is disposed at the front side of the interior space of the nacelle 20, the sub oil pan 70 may be disposed below the oil-using unit, so that the leaked oil stored in the sub oil pan 70 is guided to the main oil pan 52 via the drain part 74. The main shaft 5, the main bearing 5a, 5b, and the like are disposed at the front side of the interior space of the nacelle 20, which therefore leads to a strict restriction on the space. In view of this, the sub oil pan 70 is disposed below the oil-using unit disposed at the front side of the interior space of the nacelle 20, and the main oil pan 52 having a large capacity is disposed at the rear side of the nacelle 20, where it is easier to ensure a space. In this way, it is possible to securely receive the leaked oil from the oil using unit with the sub oil pan 70. Further, since the leaked oil in the sub oil pan 70 is guided to the main oil pan 52 having a large capacity, it is possible to reduce the size of the sub oil pan 70.

As described above, according to the above embodiment, the seal member 30 and the seal cover 40 are disposed at different positions in the height direction over a gap between the upper end 11a of the tower 11 and the edge portion 22d of the opening of the nacelle cover 22. Thus, it is possible to provide a double seal over the gap. Further, with the seal member 30 and the seal cover 40 having different structures, it is possible to provide two kinds of oil-leakage countermeasures according to the different properties of the leaked oil, which makes it possible to prevent outward leakage of the leaked oil via the gap even more securely.

Further, since the seal cover 40 is mounted to a portion of the stationary section including the tower 11 and the outer race 12b, it is possible to prevent the seal cover 40 from being deformed by distortion. Thus, it is possible to prevent the leaked oil from leaking outward through the gap produced by distortion of the seal cover 40.

Further, the oil storing part 50 is disposed on the rotational section, and the oil storing part 50 rotates with the oil using unit disposed in the interior space of the nacelle 20, which makes it possible to securely receive the leaked oil from the oil using unit. Further, since the oil storing part 50 is disposed so as to receive the leaked oil flowing down the seal cover 40 below the seal cover 40, it is possible to simplify the apparatus.

Embodiments of the present invention were described in detail above, but the present invention is not limited thereto, and various amendments and modifications may be implemented within a scope that does not depart from the present invention.

For instance, in the example illustrated in FIG.s 1, 2, 3 and 6, as to the yaw rotation bearing 12, the inner race 12a is fixed to the nacelle base plate 21 and the outer race 12b is fixed to the tower 11. However, the inner race 12a may be fixed to the tower 11 and the outer race 12b may be fixed to the nacelle base plate 21 in the yaw rotation bearing 12. Further, in FIGs. 1, 2, and 8 to 10, while the hydraulic transmission is described as the drive train 6 and the hydraulic pump 7 is disposed at the rear side of the interior space of the nacelle 20, the hydraulic pump 7 may be disposed at the front side of the interior space of the nacelle 20. Alternatively, a gearbox or a direct drive may be employed as the drive train 6. Furthermore, while the hydraulic pump 7 and the hydraulic motor 8 are illustrated as the oil using unit and the second oil-using unit, respectively, the oil-using unit and the second oil-using unit are not limited to the above.

## Claims

1. A renewable energy power generating apparatus (1) comprising:
a tower (11);
a nacelle (20) which includes a nacelle base plate (21) disposed on an upper part of the tower, and a nacelle cover (22) supported on the nacelle base plate, the nacelle cover including an opening formed along an outer peripheral surface of an upper end (11a) of the tower;
an oil-using unit disposed in an interior space of the nacelle (20);
a yaw rotation bearing (12) which includes a first rotation ring (12b) fixed to the tower (11) and a second rotation ring (12a) fixed to the nacelle base plate (21), and which rotatably supports the nacelle (20) on the tower (11);
a seal member (30) disposed so as to fill a gap between the tower (11) and the nacelle cover (22);
a seal cover (40) which is disposed above the seal member (30) so as to cover the gap; and
an oil storing part (50) disposed below the seal cover (40) and in a rotational section which includes the nacelle (20),
wherein the oil storing part (50) is configured to receive leaked oil which leaks from the oil using unit and flows down the seal cover (40),
wherein the seal cover (40) is attached to a part of a stationary section which includes the tower (11) and the first rotation ring (12b), wherein the seal member (30) slidably contacts an upper surface of an edge portion (22d) of the nacelle cover (22) around the opening.

2. The renewable energy power generating apparatus according to claim 1,
wherein the oil storing part (50) includes a nacelle oil pan (51) formed by a part of the nacelle cover (22) which is disposed at a lower part of the nacelle.

3. The renewable energy power generating apparatus according to claim 1 or 2, further comprising a yaw drive (15) for rotating the nacelle (20),
wherein the first rotation ring (12b) is disposed outside of the second rotation ring (12a), and includes external teeth (13) on an outer circumferential face of the first rotation ring (12b),
wherein the yaw drive includes a pinion gear (15b) which engages with the external teeth, and
wherein the seal member (30) is disposed below the external teeth (13) of the first rotation bearing.

4. The renewable energy power generating apparatus according to any one of claims 1 to 3, further comprising:
at least one blade (2);
a hub (3) to which the at least one blade (2) is mounted;
a nacelle base plate (21) installed on the tower (11);
a rotor (4) coupled to the hub (3) and rotatably supported on the nacelle base plate;
a main oil pan (52) disposed below the oil-using unit being disposed at a rear side of the interior space of the nacelle (20), where a side closer to the hub is a front side and a side farther from the hub is the rear side in a direction (X) along a rotation shaft of the rotor, the main oil pan (52) being supported on the nacelle base plate (21) or a frame (23) mounted to the nacelle base plate,
wherein the main oil pan (52) is configured to receive the leaked oil from the oil-using unit.

5. The renewable energy power generating apparatus according to claim 4, further comprising a leaked-oil guide (60) disposed below the oil-using unit and above the seal cover (40), in the interior space of the nacelle (20),
wherein the leaked-oil guide (60) is configured to guide the leaked oil from the oil-using unit to the main oil pan.

6. The renewable energy power generating apparatus according to claim 4 or 5, further comprising:
a second oil-using unit disposed lateral to the nacelle base plate (23) in the interior space of the nacelle (20);
a sub oil pan (70) disposed below the second oil-using unit and configured to receive leaked oil from the second oil-using unit; and
a drain part (74) for guiding the leaked oil received at the sub oil pan (70) to the main oil pan (52).

7. The renewable energy power generating apparatus according to claim 6, further comprising a protective wall (72) disposed so as to cover at least a lateral side of the oil-using unit or the second oil-using unit.

8. The renewable energy power generating apparatus according to claim 7,
wherein the protective wall (72) is supported on the nacelle base plate (21) or the frame (23).

9. The renewable energy power generating apparatus according to claim 7 or 8,
wherein the protective wall (72) is disposed so that the leaked oil having hit the protective wall falls into the sub oil pan (70) directly, or indirectly via a sub leaked-oil guide (73).

10. The renewable energy power generating apparatus according to any one of claims 7 to 9,
wherein the protective wall (72) has a liquid blocking property so that the leaked oil from the oil-using unit or the second oil-using unit does not leak out from the protective wall.

11. The renewable energy power generating apparatus according to any one of claims 1 to 3, further comprising:
at least one blade (2);
a hub (3) to which the at least one blade (2) is mounted;
a nacelle base plate (21) installed on the tower (11);
a rotor (4) coupled to the hub (3) and rotatably supported on the nacelle base plate (21);
a sub oil pan (70) disposed below the oil-using unit disposed at a front side of the interior space of the nacelle (20), where a side closer to the hub (3) is the front side and a side farther from the hub is a rear side in a direction (X) along a rotation shaft of the rotor;
a main oil pan (52) disposed at the rear side of the interior space of the nacelle (20), the main oil pan (52) being supported on the nacelle base plate (21) or a frame (23) mounted to the nacelle base plate (21); and
a drain part (74) for guiding the leaked oil received at the sub oil pan (70) to the main oil pan (52),
wherein the main oil pan (52) has a greater capacity than the sub oil pan (70).

12. The renewable energy power generating apparatus according to claim 9, further comprising:
a leaked-oil guide (60) disposed below the oil-using unit and above the seal cover (40), in the interior space of the nacelle (20); and
an oil-spout prevention cover (76, 77, 78) which covers at least a joint (9c) of a pipe connected to the oil-using unit,
wherein the leaked-oil guide (60) is configured to guide the leaked oil from the oil-using unit to the main oil pan (52), and
wherein at least one of the main oil pan (52), the leaked-oil guide (60), the sub oil pan (70) or the sub leaked-oil guide (73) is disposed below the oil-spout prevention cover (76, 77, 78).

13. The renewable energy power generating apparatus according to any one of claims 1 to 12,
wherein the renewable energy power generating apparatus (1) is a wind turbine power generating apparatus which is configured to use wind energy received from wind serving as a renewable energy source to generate electric power.

14. The renewable energy power generating apparatus according to any one of claims 1-13,
wherein an inner circumferential side (30a) of the seal member (30) is mounted and fixed to the upper part (14a) of the tower or a brake disc (16) that is attached to the upper part (11a) of the tower (11), and
wherein an outer circumferential side (30b) of the seal member (30) slidably contacts the upper surface of the edge portion (22d) of the nacelle cover (22) around the opening.

## Patentansprüche

1. Mit erneuerbarer Energie arbeitende Stromerzeugungsvorrichtung (1), umfassend:
einen Turm (11),
eine Gondel (20), die eine Gondelbasisplatte (21) enthält, die auf einem oberen Teil des Turmes angeordnet ist, sowie eine Gondelabdeckung (22) enthält, die an der Gondelbasisplatte gestützt wird, wobei die Gondelabdeckung eine Öffnung enthält, die entlang einer Außenumfangsfläche eines oberen Endes (11a) des Turms ausgebildet ist,
eine ölverbrauchende Einheit, der in einem Innenraum der Gondel (20) angeordnet ist,
ein Gierrotationslager (12), das einen ersten Rotationsring (12b) enthält, der an dem Turm (11) befestigt ist, und einen zweiten Rotationsring (12a) enthält, der an der Gondelbasisplatte (21) befestigt ist und der die Gondel (20) drehbar an dem Turm (11) stützt,
ein Dichtungselement (30), das so angeordnet ist, dass es einen Spalt zwischen dem Turm (11) und der Gondelabdeckung (22) ausfüllt,
eine Dichtungsabdeckung (40), die so über dem Dichtungselement (30) angeordnet ist, dass sie den Spalt bedeckt, und
einen ölspeichernden Teil (50), der unterhalb der Dichtungsabdeckung (40) und in einer Rotationssektion, welche die Gondel (20) enthält, angeordnet ist,
wobei der ölspeichernde Teil (50) dafür konfiguriert ist, auslaufendes Öl aufzufangen, das aus der ölverbrauchenden Einheit leckt und an der Dichtungsabdeckung (40) herabläuft,
wobei die Dichtungsabdeckung (40) an einem Teil einer stationären Sektion angebracht ist, die den Turm (11) und den ersten Rotationsring (12b) enthält, wobei das Dichtungselement (30) in einem Gleitkontakt mit einer Oberseite eines Randabschnitts (22d) der Gondelabdeckung (22) um die Öffnung herum steht.

2. Mit erneuerbarer Energie arbeitende Stromerzeugungsvorrichtung nach Anspruch 1,
wobei der ölspeichernde Teil (50) eine Gondelölwanne (51) enthält, die durch einen Teil der Gondelabdeckung (22) gebildet wird, die in einem unteren Teil der Gondel angeordnet ist.

3. Mit erneuerbarer Energie arbeitende Stromerzeugungsvorrichtung nach Anspruch 1 oder 2, die ferner einen Gierantrieb (15) zum Drehen der Gondel (20) umfasst,
wobei der erste Rotationsring (12b) außerhalb des zweiten Rotationsrings (12a) angeordnet ist und externe Zähne (13) auf einer Außenumfangsfläche des erstens Rotationsrings (12b) enthält,
wobei der Gierantrieb ein Ritzel (15b) enthält, das mit den externen Zähnen verzahnt ist, und
wobei das Dichtungselement (30) unterhalb der externen Zähne (13) des ersten Rotationslagers angeordnet ist.

4. Mit erneuerbarer Energie arbeitende Stromerzeugungsvorrichtung nach einem der Ansprüche 1 bis 3, ferner umfassend:
mindestens einen Flügel (2),
eine Nabe (3), an der der mindestens eine Flügel (2) montiert ist,
eine Gondelbasisplatte (21), die auf dem Turm (11) installiert ist,
einen Rotor (4), der mit der Nabe (3) gekoppelt ist und drehbar an der Gondelbasisplatte gestützt wird,
eine Hauptölwanne (52), die unterhalb der ölverbrauchenden Einheit angeordnet ist, die auf einer Rückseite des Innenraums der Gondel (20) angeordnet ist, wobei in einer Richtung (X) entlang einer Rotationswelle des Rotors eine Seite, die näher an der Nabe liegt, eine Vorderseite ist und eine Seite, die weiter von der Nabe entfernt liegt, die Rückseite ist, wobei die Hauptölwanne (52) an der Gondelbasisplatte (21) oder an einem Rahmen (23), der an der Gondelbasisplatte montiert ist, gestützt wird,
wobei die Hauptölwanne (52) dafür konfiguriert ist, das aus der ölverbrauchenden Einheit auslaufende Öl aufzufangen.

5. Mit erneuerbarer Energie arbeitende Stromerzeugungsvorrichtung nach Anspruch 4, die ferner eine Leckölführung (60) umfasst, die unterhalb der ölverbrauchenden Einheit und über der Dichtungsabdeckung (40) im Innenraum der Gondel (20) angeordnet ist,
wobei die Leckölführung (60) dafür konfiguriert ist, das aus der ölverbrauchenden Einheit ausgelaufene Öl zu der Hauptölwanne zu leiten.

6. Mit erneuerbarer Energie arbeitende Stromerzeugungsvorrichtung nach Anspruch 4 oder 5, ferner umfassend:
eine zweite ölverbrauchende Einheit, die seitlich der Gondelbasisplatte (23) in dem Innenraum der Gondel (20) angeordnet ist,
eine Nebenölwanne (70), die unterhalb der zweiten ölverbrauchenden Einheit angeordnet ist und dafür konfiguriert ist, aus der zweiten ölverbrauchenden Einheit ausgelaufenes Öl aufzufangen, und
einen Abflussteil (74) zum Leiten des ausgelaufenen Öls, das in der Nebenölwanne (70) aufgefangen wird, zu der Hauptölwanne (52).

7. Mit erneuerbarer Energie arbeitende Stromerzeugungsvorrichtung nach Anspruch 6, die ferner eine Schutzwand (72) umfasst, die so angeordnet ist, dass sie mindestens eine laterale Seite der ölverbrauchenden Einheit oder der zweiten ölverbrauchenden Einheit bedeckt.

8. Mit erneuerbarer Energie arbeitende Stromerzeugungsvorrichtung nach Anspruch 7,
wobei die Schutzwand (72) an der Gondelbasisplatte (21) oder dem Rahmen (23) gestützt wird.

9. Mit erneuerbarer Energie arbeitende Stromerzeugungsvorrichtung nach Anspruch 7 oder 8,
wobei die Schutzwand (72) so angeordnet ist, dass das ausgelaufene Öl, nachdem es auf die Schutzwand trifft, direkt oder indirekt über eine Nebenleckölführung (73) in die Nebenölwanne (70) tropft.

10. Mit erneuerbarer Energie arbeitende Stromerzeugungsvorrichtung nach einem der Ansprüche 7 bis 9,
wobei die Schutzwand (72) eine Flüssigkeitssperreigenschaft besitzt, so dass das aus der ölverbrauchenden Einheit oder der zweiten ölverbrauchenden Einheit ausgelaufene Öl nicht aus der Schutzwand herausläuft.

11. Mit erneuerbarer Energie arbeitende Stromerzeugungsvorrichtung nach einem der Ansprüche 1 bis 3, ferner umfassend:
mindestens einen Flügel (2),
eine Nabe (3), an der der mindestens eine Flügel (2) montiert ist,
einen Gondelbasisplatte (21), die an dem Turm (11) installiert ist,
einen Rotor (4), der mit der Nabe (3) gekoppelt ist und drehbar an der Gondelbasisplatte gestützt wird (21),
eine Nebenölwanne (70), die unterhalb der ölverbrauchenden Einheit angeordnet ist, die auf einer Vorderseite des Innenraums der Gondel (20) angeordnet ist, wobei in einer Richtung (X) entlang einer Rotationswelle des Rotors eine Seite, die näher an der Nabe (3) liegt, die Vorderseite ist und eine Seite, die weiter von der Nabe entfernt liegt, eine Rückseite ist,
eine Hauptölwanne (52), die auf der Rückseite des Innenraums der Gondel (20) angeordnet ist, wobei die Hauptölwanne (52) an der Gondelbasisplatte (21) oder einem Rahmen (23), der an der Gondelbasisplatte (21) montiert ist, gestützt wird, und
einen Abflussteil (74) zum Leiten des ausgelaufenen Öls, das in der Nebenölwanne (70) aufgefangen wird, zu der Hauptölwanne (52),
wobei die Hauptölwanne (52) eine größere Kapazität als die Nebenölwanne (70) hat.

12. Mit erneuerbarer Energie arbeitende Stromerzeugungsvorrichtung nach Anspruch 9, ferner umfassend:
eine Leckölführung (60), die unterhalb der ölverbrauchenden Einheit und über der Dichtungsabdeckung (40) in dem Innenraum der Gondel (20) angeordnet ist, und
eine Ölaustrittsvermeidungsabdeckung (76, 77, 78), die mindestens eine Verbindungskupplung (9c) eines Rohres bedeckt, das mit der ölverbrauchenden Einheit verbunden ist,
wobei die Leckölführung (60) dafür konfiguriert ist, das aus der ölverbrauchenden Einheit ausgelaufene Öl zu der Hauptölwanne (52) zu leiten, und
wobei mindestens eine der Hauptölwanne (52), der Leckölführung (60), der Nebenölwanne (70) und der Nebenleckölführung (73) unterhalb der Ölaustrittsvermeidungsabdeckung (76, 77, 78) angeordnet ist.

13. Mit erneuerbarer Energie arbeitende Stromerzeugungsvorrichtung nach einem der Ansprüche 1 bis 12,
wobei die mit erneuerbarer Energie arbeitende Stromerzeugungsvorrichtung (1) eine Windturbinen-Stromerzeugungsvorrichtung ist, die dafür konfiguriert ist, Windenergie zu nutzen, die durch den Wind erhalten wird, der als eine erneuerbare Energiequelle dient, um elektrischen Strom zu erzeugen.

14. Mit erneuerbarer Energie arbeitende Stromerzeugungsvorrichtung nach einem der Ansprüche 1-13,
wobei eine Innenumfangsseite (30a) des Dichtungselements (30) an dem oberen Teil (11a) des Turms oder einer Scheibenbremse (16), die an dem oberen Teil (11 a) des Turms (11) angebracht ist, montiert und befestigt ist, und
wobei eine Außenumfangsseite (30b) des Dichtungselements (30) in einem Gleitkontakt mit der Oberseite des Randabschnitts (22d) der Gondelabdeckung (22) um die Öffnung herum steht.

## Revendications

1. Dispositif de génération d'électricité à énergie renouvelable (1) comprenant :
une tour (11) ;
une nacelle (20) qui comprend une plaque de base de nacelle (21) disposée sur une partie supérieure de la tour, et un capot de nacelle (22) supporté sur la plaque de base de nacelle, le capot de nacelle comprenant une ouverture formée le long d'une surface périphérique extérieure d'une extrémité supérieure (11a) de la tour ;
une unité d'utilisation d'huile disposée dans un espace intérieur de la nacelle (20) ;
un palier de rotation de lacet (12) qui comprend un premier anneau de rotation (12b) fixé sur la tour (11) et un deuxième anneau de rotation (12a) fixé sur la plaque de base de nacelle (21), et qui supporte de façon rotative la nacelle (20) sur la tour (11) ;
un élément de joint d'étanchéité (30) disposé de façon à remplir un espace entre la tour (11) et le capot de nacelle (22) ;
un couvercle de joint d'étanchéité (40) qui est disposé au-dessus de l'élément de joint d'étanchéité (30) de façon à recouvrir l'espace ; et
une partie de stockage d'huile (50) disposée en-dessous du couvercle de joint d'étanchéité (40) et dans une section de rotation qui comprend la nacelle (20),
dans lequel la partie de stockage d'huile (50) est configurée pour recevoir de l'huile qui fuit de l'unité d'utilisation d'huile et s'écoule vers le bas du couvercle de joint d'étanchéité (40),
dans lequel
le couvercle de joint d'étanchéité (40) est fixé sur une partie d'une section stationnaire qui comprend la tour (11) et le premier anneau de rotation (12b), l'élément de joint d'étanchéité (30) étant en contact glissant avec une surface supérieure d'une partie de bord (22d) du capot de nacelle (22) autour de l'ouverture.

2. Dispositif de génération d'électricité à énergie renouvelable selon la revendication 1,
dans lequel la partie de stockage d'huile (50) comprend un bac à huile de nacelle (51) formé par une partie du capot de nacelle (22) qui est disposée au niveau d'une partie inférieure de la nacelle.

3. Dispositif de génération d'électricité à énergie renouvelable selon la revendication 1 ou 2, comprenant en outre un dispositif d'entraînement en lacet (15) pour faire tourner la nacelle (20),
dans lequel le premier anneau de rotation (12b) est disposé à l'extérieur du deuxième anneau de rotation (12a), et comprend des dents externes (13) sur une face circonférentielle extérieure du premier anneau de rotation (12b),
dans lequel le dispositif d'entraînement en lacet comprend un pignon (15b) qui coopère avec les dents externes, et
dans lequel l'élément de joint d'étanchéité (30) est disposé en-dessous des dents externes (13) du premier palier de rotation.

4. Dispositif de génération d'électricité à énergie renouvelable selon l'une quelconque des revendications 1 à 3, comprenant en outre :
au moins une pale (2) ;
un moyeu (3) sur lequel la au moins une pale (2) est montée ;
une plaque de base de nacelle (21) installée sur la tour (11) ;
un rotor (4) couplé au moyeu (3) et supporté de façon rotative sur la plaque de base de nacelle ;
un bac à huile principal (52) disposé en-dessous de l'unité d'utilisation d'huile qui est disposée au niveau d'un côté arrière de l'espace intérieur de la nacelle (20), un côté plus près du moyeu étant un côté avant et un côté plus loin du moyeu étant le côté arrière dans une direction (X) le long d'un arbre de rotation du rotor, le bac à huile principal (52) étant supporté sur la plaque de base de nacelle (21) ou un bâti (23) monté sur la plaque de base de nacelle,
dans lequel le bac à huile principal (52) est configuré pour recevoir l'huile qui fuit de l'unité d'utilisation d'huile.

5. Dispositif de génération d'électricité à énergie renouvelable selon la revendication 4, comprenant en outre un guide à huile qui fuit (60) disposé en-dessous de l'unité d'utilisation d'huile et au-dessus du couvercle de joint d'étanchéité (40), dans l'espace intérieur de la nacelle (20),
dans lequel le guide à huile qui fuit (60) est configuré pour guider l'huile qui fuit depuis l'unité d'utilisation d'huile jusqu'au bac à huile principal.

6. Dispositif de génération d'électricité à énergie renouvelable selon la revendication 4 ou 5, comprenant en outre :
une deuxième unité d'utilisation d'huile disposée latéralement sur la plaque de base de nacelle (23) dans l'espace intérieur de la nacelle (20) ;
un bac à huile secondaire (70) disposé en-dessous de la deuxième unité d'utilisation d'huile et configuré pour recevoir de l'huile qui fuit provenant de la deuxième unité d'utilisation d'huile ; et
une partie d'évacuation (74) pour guider l'huile qui fuit reçue au niveau du bac à huile secondaire (70) jusqu'au bac à huile principal (52).

7. Dispositif de génération d'électricité à énergie renouvelable selon la revendication 6, comprenant en outre une paroi de protection (72) disposée de façon à recouvrir au moins un côté latéral de l'unité d'utilisation d'huile ou de la deuxième unité d'utilisation d'huile.

8. Dispositif de génération d'électricité à énergie renouvelable selon la revendication 7,
dans lequel la paroi de protection (72) est supportée sur la plaque de base de nacelle (21) ou le bâti (23).

9. Dispositif de génération d'électricité à énergie renouvelable selon la revendication 7 ou 8,
dans lequel la paroi de protection (72) est disposée de telle sorte que l'huile qui fuit qui a frappé la paroi de protection tombe directement dans le bac à huile secondaire (70), ou indirectement par l'intermédiaire d'un guide à huile qui fuit secondaire (73).

10. Dispositif de génération d'électricité à énergie renouvelable selon l'une quelconque des revendications 7 à 9,
dans lequel la paroi de protection (72) a une propriété de blocage de liquide de telle sorte que l'huile qui fuit de l'unité d'utilisation d'huile ou de la deuxième unité d'utilisation d'huile ne fuit pas à l'extérieur de la paroi de protection.

11. Dispositif de génération d'électricité à énergie renouvelable selon l'une quelconque des revendications 1 à 3, comprenant en outre :
au moins une pale (2) ;
un moyeu (3) sur lequel la au moins une pale (2) est montée ;
une plaque de base de nacelle (21) installée sur la tour (11) ;
un rotor (4) couplé au moyeu (3) et supporté de façon rotative sur la plaque de base de nacelle (21) ;
un bac à huile secondaire (70) disposé en-dessous de l'unité d'utilisation d'huile disposée sur un côté avant de l'espace intérieur de la nacelle (20), un côté plus près du moyeu (3) étant le côté avant et un côté plus loin du moyeu étant un côté arrière dans une direction (X) le long d'un arbre de rotation du rotor ;
un bac à huile principal (52) disposé sur le côté arrière de l'espace intérieur de la nacelle (20), le bac à huile principal (52) étant supporté sur la plaque de base de nacelle (21) ou un bâti (23) monté sur la plaque de base de nacelle (21) ; et
une partie d'évacuation (74) destinée à guider l'huile qui fuit reçue au niveau du bac à huile secondaire (70) jusqu'au bac à huile principal (52),
dans lequel le bac à huile principal (52) a une capacité plus grande que le bac à huile secondaire (70).

12. Dispositif de génération d'électricité à énergie renouvelable selon la revendication 9, comprenant en outre :
un guide à huile qui fuit (60) disposé en-dessous de l'unité d'utilisation d'huile et au-dessus du couvercle de joint d'étanchéité (40), dans l'espace intérieur de la nacelle (20) ; et
un capot de prévention de giclement d'huile (76, 77, 78) qui recouvre au moins un joint (9c) d'un tuyau relié à l'unité d'utilisation d'huile,
dans lequel le guide à huile qui fuit (60) est configuré pour guider l'huile qui fuit depuis l'unité d'utilisation d'huile jusqu'au bac à huile principal (52), et
dans lequel au moins l'un du bac à huile principal (52), du guide à huile qui fuit (60), du bac à huile secondaire (70) ou du guide à huile qui fuit secondaire (73) est disposé en-dessous du capot de prévention de giclement d'huile (76, 77, 78).

13. Dispositif de génération d'électricité à énergie renouvelable selon l'une quelconque des revendications 1 à 12,
dans lequel l'appareil de génération d'électricité à énergie renouvelable (1) est une éolienne qui est configurée pour utiliser de l'énergie éolienne reçue du vent qui sert de source d'énergie renouvelable pour générer de l'énergie électrique.

14. Dispositif de génération d'électricité à énergie renouvelable selon l'une quelconque des revendications 1 à 13,
dans lequel un côté circonférentiel intérieur (30a) de l'élément de joint d'étanchéité (30) est monté et fixé sur la partie supérieure (11a) de la tour ou un disque de frein (16) qui est fixé sur la partie supérieure (11a) de la tour (11), et
dans lequel un côté circonférentiel extérieur (30b) de l'élément de joint d'étanchéité (30) est en contact glissant avec la surface supérieure de la partie de bord (22d) du capot de nacelle (22) autour de l'ouverture.
